# EUROPEAN PATENT APPLICATION

(11) **EP 4 779 773 A1**
(43) Date of publication of application: **22.07.2026**
(21) Application number: 24864680.4
(22) Date of filing: 12.09.2024
(51) Int. Cl.: H01M 50/244

(54) **BATTERY PACK**

(30) Priority: 13.09.2023 CN 202322488549 U; 13.09.2023 CN 202322488546 U
(71) Applicant: Zhuhai Cosmx Power Supply Co., Ltd., Zhuhai, Guangdong 519040 (CN)
(72) Inventor: DU, Guoqiu, Zhuhai, Guangdong 519040 (CN); DILIMURETIJIANG, Keremu, Zhuhai, Guangdong 519040 (CN); DENG, Jiadong, Zhuhai, Guangdong 519040 (CN); LI, Jie, Zhuhai, Guangdong 519040 (CN); WU, Wusheng, Zhuhai, Guangdong 519040 (CN); ZHAO, Wenbin, Zhuhai, Guangdong 519040 (CN)
(74) Representative: Murgitroyd & Company
(86) International application number: PCT/CN2024/118417
(87) International publication number: WO 2025/055966

(57) **Abstract**

The present application discloses a battery pack. The battery pack includes: a BMS control board on which a first connection terminal electrically connected thereto is provided; and a battery cell bracket which is located below the BMS control board and on which a second connection terminal is provided, where the second connection terminal extends to a position opposite and abuts against the first connection terminal such that the second connection terminal is electrically connected to the first connection terminal. In the battery pack according to the present application, the electrical connection between the second connection terminal and the first connection terminal is cleverly achieved by arranging the second connection terminal to be opposite and abut against the first connection terminal. With the above configuration, the need for connection harnesses between the battery cell bracket and the BMS control board is eliminated, such that short circuits of the battery pack caused by faults such as failure and loosening of the connection harnesses of the BMS control board or crossing of lines are avoided.

## Description

### TECHNICAL FIELD

The present application relates to the technical field of batteries, and in particular to a battery pack.

### BACKGROUND

Lithium-ion batteries have the advantages such as light weight, long cycle life, and high capacity. However, during the use of the lithium ion battery, internal short circuits of a battery pack are likely to occur.

### SUMMARY

In view of this, the present application provides a battery pack which solves the problem of internal short circuits of the battery pack being likely to occur.

In a first aspect, the present application provides a battery pack, including: a BMS control board which is provided with a first connection terminal electrically connected to the BMS control board; and a battery cell bracket which is located below the BMS control board and on which a second connection terminal is provided, where the second connection terminal extends to a position opposite and abuts against the first connection terminal such that the second connection terminal is electrically connected to the first connection terminal.

In the battery pack provided in the first aspect of the present application, a first connection terminal is provided on the BMS control board, a second connection terminal is provided on the battery cell bracket, and the electrical connection between the second connection terminal and the first connection terminal is cleverly achieved by arranging the second connection terminal to be opposite and abut against the first connection terminal. With the above configuration, the need for connection harnesses between the battery cell bracket and the BMS control board is eliminated, such that internal short circuits of the battery pack caused by faults such as failure and loosening of the connection harnesses of the BMS control board or crossing of harnesses are avoided.

In a second aspect, the present application provides a battery pack, including: a BMS control board; an interconnection busbar fixed and electrically connected to the BMS control board; and an upper cover having an accommodating hole in which an electrode terminal post is provided, where the interconnection busbar can extend to and be connected to the electrode terminal post.

In the battery pack provided in the second aspect of the present application, an electrode terminal post is provided in the upper cover; the interconnection busbar is arranged on the BMS control board; and the electrical connection between the BMS control board and the electrode terminal post is achieved by means of the interconnection busbar so as to lead out a main electrode. With the above configuration, the need for connection lines between the BMS control board and the electrode terminal post is eliminated, such that internal short circuits of the battery pack caused by the faults such as failure and loosening of the connection lines of the BMS control board or crossing of lines are avoided.

### BRIEF DESCRIPTION OF THE DRAWINGS

To describe technical solutions in embodiments of the present application or in the prior art more clearly, the following briefly describes the drawings needed for describing the embodiments or the prior art. It is clear that the drawings in the following descriptions are merely part of embodiments of the present application, and a person of ordinary skill in the art may still derive other drawings from the provided drawings without creative efforts.
Fig. 1 is a schematic structural diagram of a second connection terminal according to the present application;
Fig. 2 is a schematic structural diagram of a first connection terminal according to the present application;
Fig. 3 is a schematic structural diagram of a battery cell bracket provided on a battery cell module according to the present application;
Fig. 4 is a top view of Fig. 3;
Fig. 5 is a schematic structural diagram of a battery cell bracket and a BMS control board provided on a battery cell module according to the present application;
Fig. 6 is a top view of Fig. 5;
Fig. 7 is a schematic structural diagram of the present application;
Fig. 8 is a sectional view taken along line A-A in Fig. 7;
Fig. 9 is a sectional view taken along line B-B in Fig. 7;
Fig. 10 is a schematic structural diagram of an interconnection busbar according to the present application;
Fig. 11 is a schematic structural diagram of a battery cell module, a BMS control board and an interconnection busbar according to the present application;
Fig. 12 is a side view of Fig. 11;
Fig. 13 is a schematic structural diagram of an electrode terminal post according to the present application;
Fig. 14 is a schematic structural diagram of a positive electrode terminal post according to the present application;
Fig. 15 is a schematic structural diagram of the positive electrode terminal post according to the present application from another perspective;
Fig. 16 is a schematic structural diagram of a negative electrode terminal post according to the present application;
Fig. 17 is a schematic structural diagram of the negative electrode terminal post according to the present application from another perspective;
Fig. 18 is a schematic structural diagram of a battery pack according to the present application;
Fig. 19 is a side view of Fig. 18;
Fig. 20 is a front view of Fig. 18;
Fig. 21 is a sectional view taken along line A-A in Fig. 20; and
Fig. 22 is a sectional view taken along line B-B in Fig. 20.

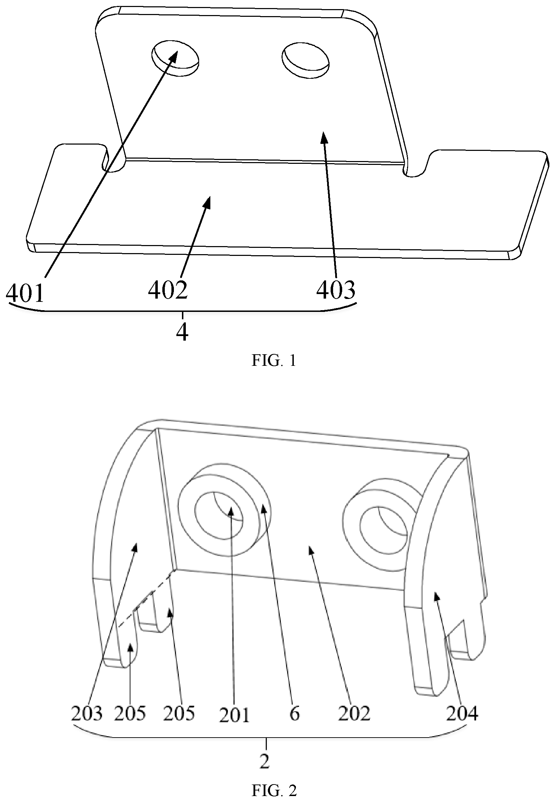

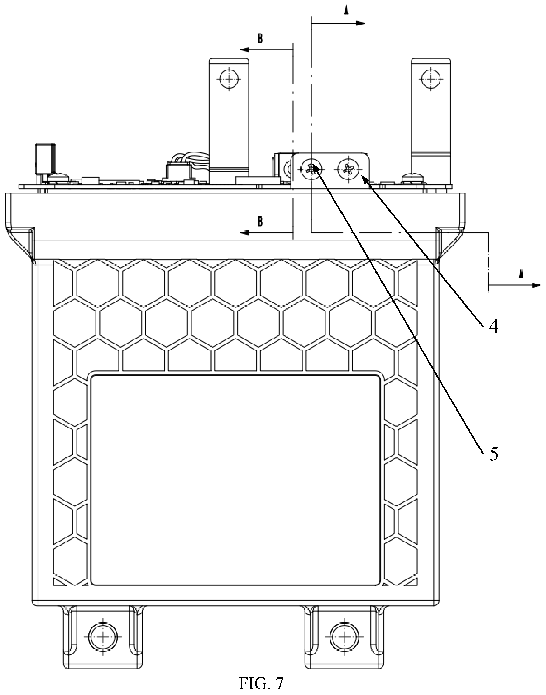

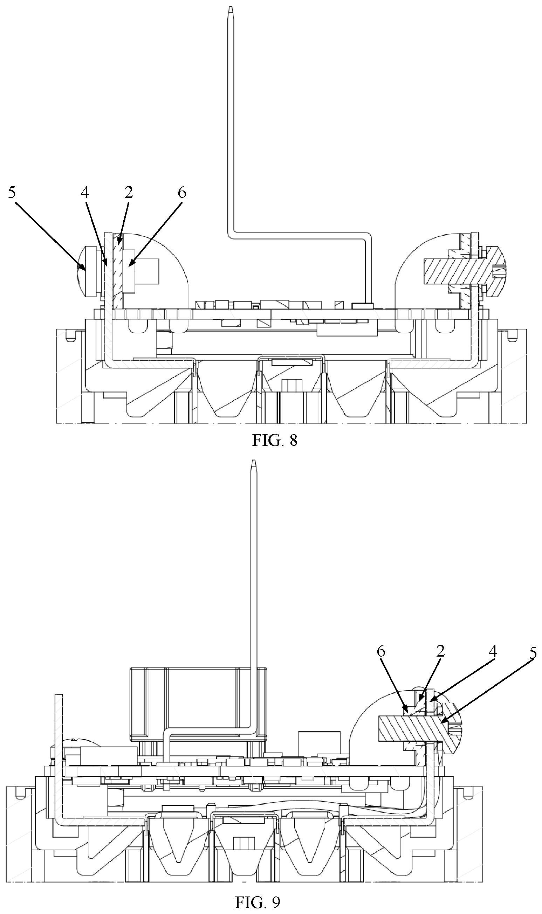

In Figs. 1 to 9:
1. BMS control board; 2. first connection terminal; 3. battery cell bracket; 4. second connection terminal; 5. fastener; 6. connecting sleeve; 7. tab; 8. battery cell module lower cover; 101. clearance opening; 102. second positioning member; 201. first mounting hole; 202. first portion; 203. second portion; 204. third portion; 205. solder pin; 301. first positioning member; 401. second mounting hole; 402. connection portion; 403. lead-out portion.

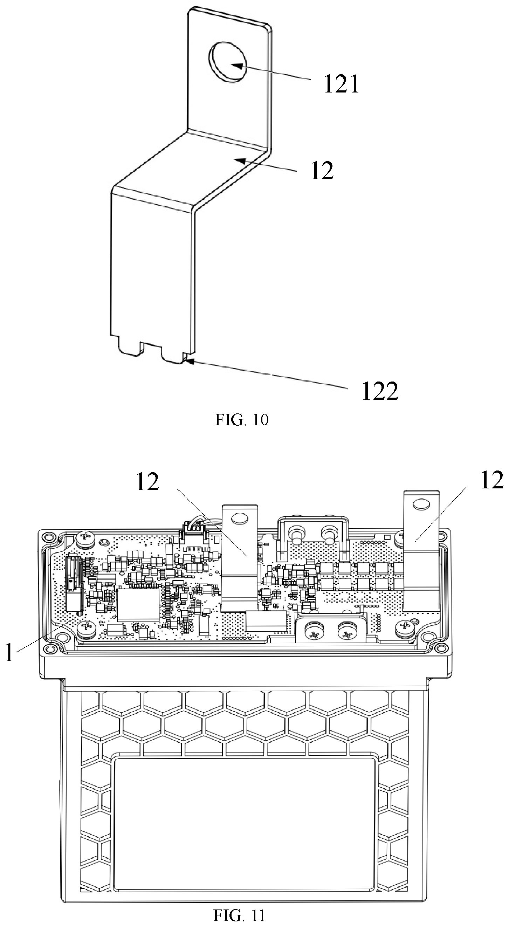

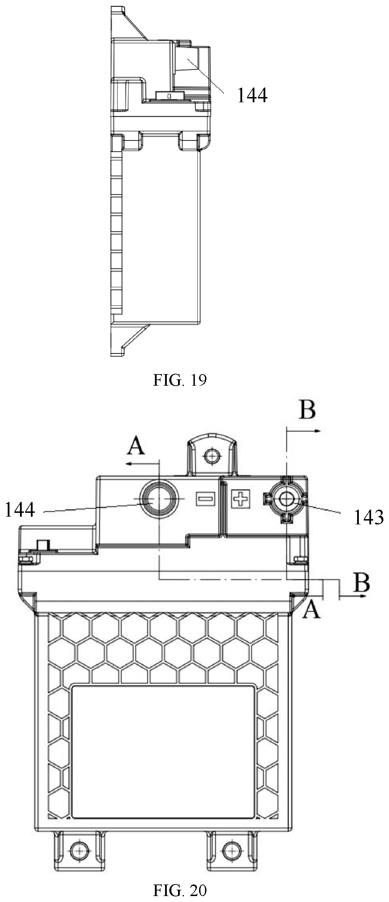

In Figs. 10 to 22:
1. BMS control board; 12. interconnection busbar; 13. upper cover; 14. electrode terminal post; 15. fastener; 16. sealing gasket; 121. first hole; 122. solder pin; 131. fool-proof structural member; 141. internal connection end; 142. external connection end; 143. positive electrode terminal post; 144. negative electrode terminal post; 1311. fin; 1411. second hole; 1421. third hole.

### DETAILED DESCRIPTION OF THE EMBODIMENTS

Technical solutions in embodiments of the present application are clearly and completely described below with reference to the drawings in the embodiments of the present application. Apparently, the embodiments described are merely part rather than all of the embodiments of the present application. All other embodiments obtained by a person of ordinary skill in the art based on the embodiments of the present application without creative efforts shall fall within the scope of protection of the present application.

Thanks to the advantages such as light weight, long cycle life and high capacity, lithium-ion batteries are widely used in electric vehicles. However, a battery management system (BMS) control board of a battery pack has an excessive number of connection harnesses, resulting in difficult management and certain potential safety hazards. When wiring faults such as failure and loosening of the connection harnesses of the BMS control board or crossing of the connection harnesses occur, internal short circuits of the battery pack will be caused, rendering the BMS control board unable to timely feed back data such as temperature-voltage. In this case, if the battery pack does not receive attention, it will fail to supply power normally, and a rise in internal temperature of the battery pack may be eventually caused, resulting in a thermal runaway phenomenon.

To this end, the present application provides a battery pack which solves the problems of difficult management due to an excessive number of connection harnesses on the BMS control board, and internal short circuits of the battery pack caused by wiring faults such as harness loosening or harness crossing. The battery pack is described in detail below with reference to Figs. 1 to 9.

As shown in Figs. 1 to 9, the battery pack includes a BMS control board 1 and a battery cell bracket 3. The BMS control board 1 is arranged above the battery cell bracket 3. A first connection terminal 2 is provided on the BMS control board 1. A second connection terminal 4 is provided on the battery cell bracket 3. The second connection terminal 4 has an extension length extending upward relative to the battery cell bracket 3, the second connection terminal 4 extends to a position opposite the first connection terminal 2, and the second connection terminal 4 is in abutting contact with the first connection terminal 2, thereby enabling the electrical connection between the second connection terminal 4 and the first connection terminal 2, and thus the electrical connection between the battery cell bracket 3 and the BMS control board 1, and in turn enabling a main electrode of the battery pack to be electrically connected to the BMS control board 1.

It should be noted that the first connection terminal 2 includes a positive connection plate and a negative connection plate. Correspondingly, the second connection terminal 4 includes a positive lead-out plate and a negative lead-out plate.

Further, the positive connection plate and the negative connection plate are both copper busbars. Specifically, the positive connection plate is a BACK+ copper busbar, and the negative connection plate is a BACK- copper busbar.

Further, the positive lead-out plate and the negative lead-out plate are both copper busbars. Specifically, the positive lead-out plate is a positive copper busbar, and the negative lead-out plate is a negative copper busbar.

It should be further noted that the battery pack includes a battery cell module. The battery cell module is located below the battery cell bracket 3. Tabs 7 of the battery cell module are arranged on the battery cell bracket 3, and the tabs 7 of the battery cell module are electrically connected to the second connection terminal 4.

Further, the battery cell module is placed inside a battery cell module lower cover 8. The battery cell bracket 3 is then supported on the battery cell module lower cover 8. The battery cell bracket 3 is provided with tab lead-out slots. The tabs 7 of the battery cell module pass through the tab lead-out slots of the battery cell bracket 3 and are connected in sequence to form a main positive tab and a main negative tab. The positive lead-out plate is electrically connected to the main positive tab; and the negative lead-out plate is electrically connected to the main negative tab.

In the present application, the need for the connection harnesses between the battery cell bracket 3 and the BMS control board 1 is omitted, such that the internal short circuits of the battery pack caused by the faults such as the failure and loosening of the connection harnesses on the BMS control board 1 or the crossing of the harnesses are avoided, the ability of the BMS control board 1 to timely feed back data such as temperature-voltage is ensured, and the thermal runaway inside a battery cell due to temperature rise is effectively avoided, thereby effectively improving the safety and reliability of the battery pack.

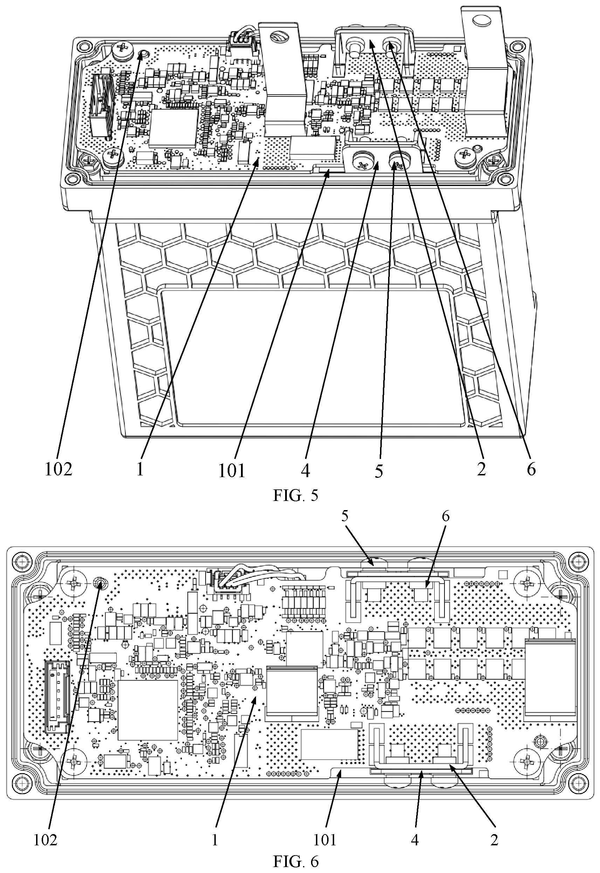

In some embodiments of the present application, referring to Fig. 2, a first mounting hole 201 is formed in the first connection terminal 2. Referring to Fig. 1, a second mounting hole 401 positioned opposite the first mounting hole 201 is formed in the second connection terminal 4. Referring to Figs. 5-9, the first connection terminal 2 is fixed and electrically connected to the second connection terminal 4 by a fastener 5 passing through the first mounting hole 201 and the second mounting hole 401.

The first connection terminal 2 is arranged opposite the second connection terminal 4, the first mounting hole 201 and the second mounting hole 401 are respectively provided in opposite regions of the first connection terminal 2 and the second connection terminal 4, and the fastener 5 passes through the two mounting holes, such that a secure abutting connection between the first connection terminal 2 and the second connection terminal 4 is conveniently and quickly achieved, thereby ensuring the reliability of electrical connection between the first connection terminal 2 and the second connection terminal 4.

Further, a plurality of first mounting holes 201 and a plurality of second mounting holes 401 are provided.

Preferably, in a direction parallel to the BMS control board 1, two first mounting holes 201 are provided side-by-side; and in the direction parallel to the BMS control board 1, two second mounting holes 401 are provided side-by-side.

This further increases the number of connection points between the first connection terminal 2 and the second connection terminal 4, thereby effectively ensuring the effect of the secure abutting connection between the first connection terminal 2 and the second connection terminal 4, and thus the reliability of the electrical connection between the first connection terminal 2 and the second connection terminal 4.

It should be noted that, in addition to providing the first mounting hole 201 and the second mounting hole 401, and passing the fastener 5 through the two mounting holes to realize the fixation and electrical connection between the first connection terminal 2 and the second connection terminal 4, other structural arrangements are also possible. For example, the first connection terminal 2 and the second connection terminal 4 are welded together by laser welding, thereby achieving the fixation and electrical connection between the first connection terminal 2 and the second connection terminal 4.

In some embodiments of the present application, the first mounting hole 201 is a first through hole formed in the first connection terminal 2. The second mounting hole 401 is a second through hole formed in the second connection terminal 4. A connecting sleeve 6 is provided on a side of the first connection terminal 2 away from the second connection terminal 4, and the connecting sleeve 6 is provided with an internal thread. The internal thread of the connecting sleeve 6 is positioned opposite the first through hole and the second through hole. The fastener 5 is a fixing screw having an external thread adapted to the internal thread. The fixing screw passes through the second through hole, the first through hole and the connecting sleeve 6 in sequence, so as to lock and connect the first connection terminal 2 to the second connection terminal 4, thereby achieving the effect of fixation and electrical connection.

The connecting sleeve 6 is a rivet nut; and the fixing screw is an M4*8 cross recessed pan head combination machine screw.

It should be noted that the connecting sleeve 6 may also be fixedly arranged on a side of the second connection terminal 4 away from the first connection terminal 2.

In some embodiments of the present application, the first mounting hole 201 is a first threaded hole formed in the first connection terminal 2. The second mounting hole 401 is a second threaded hole formed in the second connection terminal 4. The fastener 5 is a screw having an external thread. The screw passes through the first threaded hole and the second threaded hole in sequence, so as to lock and connect the first connection terminal 2 to the second connection terminal 4, thereby achieving the effect of fixation and electrical connection.

This further enriches the forms of fixation and electrical connection between the first connection terminal 2 and the second connection terminal 4.

Referring to Fig. 2, in some embodiments of the present application, solder pins 205 are provided at the bottom of the first connection terminal 2. The solder pins 205 are inserted into and soldered to the BMS control board 1.

Further, the solder pins 205 are soldered to the BMS control board 1 by means of reflow soldering.

This allows the electrical connection of the first connection terminal 2 to the BMS control board 1 to be more convenient and rapid, and easy to manage and control.

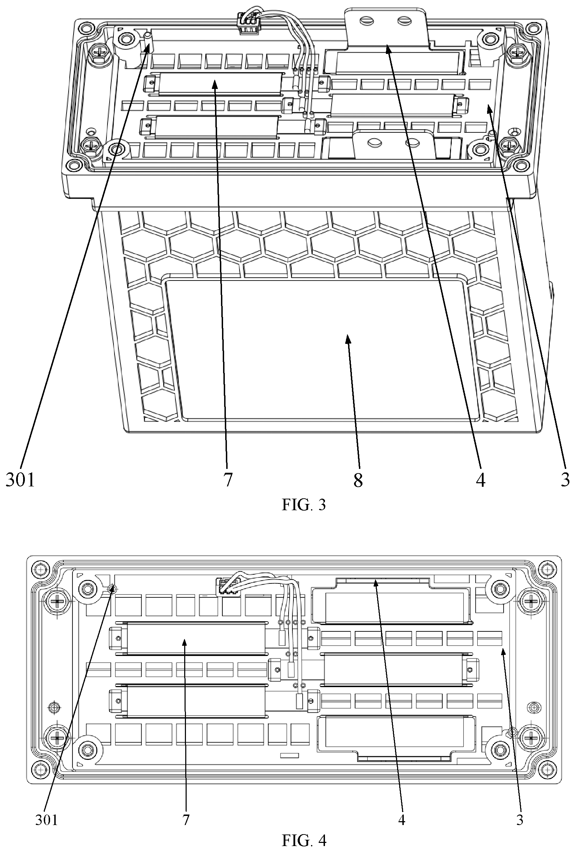

Referring to Figs. 2 and 4, in some embodiments of the present application, the first connection terminal 2 includes a first portion 202, a second portion 203, and a third portion 204. The first portion 202 is in abutting contact with the second connection terminal 4. The second portion 203 and the third portion 204 are arranged on opposite sides of the first portion 202, respectively. The solder pins 205 are provided on the bottom of each of the second portion 203 and the third portion 204.

It should be noted that the second portion 203 and the third portion 204 are located on a side of the first portion 202 away from the second connection terminal 4.

The first portion 202, the second portion 203 and the third portion 204 are each of a plate structure. Further, the first portion 202, the second portion 203 and the third portion 204 may be formed by bending the same plate material.

This allows the solder pins 205 of the first connection terminal 2 not to be directly provided on the first portion 202, such that the smoothness of a surface of the first portion 202 is ensured, and the effect of the secure abutting connection between the first portion 202 and the second connection terminal 4 is thus ensured, thereby ensuring the current flow effect of the current flowing through the second connection terminal 4 to the first portion 202. Further, the solder pins 205 being provided on the bottom of each of the second portion 203 and the third portion 204 not only ensures the effect of reliable fixing of the first connection terminal 2 on the BMS control board 1, but also enables the current flowing through the first portion 202 to flow in parallel through the second portion 203 and the third portion 204 to the BMS control board 1.

Referring to Fig. 2, two solder pins 205 are provided spaced apart on the bottom of the second portion 203. A gap distance between two adjacent solder pins 205 ranges from 2 mm to 5 mm. Preferably, the gap distance between two adjacent solder pins 205 of the second portion 203 is 3.5 mm.

By providing two spaced-apart solder pins 205 on the bottom of the second portion 203, the second portion 203 can be soldered to the BMS control board 1 by means of wave soldering, thereby optimizing the soldering process and ensuring the soldering effect.

Similarly, two solder pins 205 are provided spaced apart on the bottom of the third portion 204. A gap distance between two adjacent solder pins 205 ranges from 2 mm to 5 mm. Preferably, the gap distance between two adjacent solder pins 205 of the third portion 204 is 3.5 mm.

By providing two spaced-apart solder pins 205 on the bottom of the third portion 204, the third portion 204 can be soldered to the BMS control board 1 by means of wave soldering, thereby optimizing the soldering process and ensuring the soldering effect.

Referring to Fig. 3, in some embodiments of the present application, the second connection terminal 4 and the battery cell bracket 3 are formed as an integral insert-moulded structure.

It should be noted that the integral insert-moulded structure refers to that, after the second connection terminal 4 is provided, the second connection terminal 4 is placed in a battery cell bracket mould of an injection moulding machine according to a preset arrangement position, then plastic particles are melted by the injection moulding machine and delivered to the battery cell bracket mould, and finally the plastic encapsulates the second connection terminal 4 together to form an integral structure of the battery cell bracket 3 and the second connection terminal 4.

With the above configuration, precise positioning of the second connection terminal 4 on the battery cell bracket 3 can be ensured, resulting in higher positional accuracy of the second connection terminal 4 and a more reliable and stable fixation on the battery cell bracket 3.

Referring to Fig. 1, it should be noted that the second connection terminal 4 includes a connection portion 402 and a lead-out portion 403. The connection portion 402 is located at the battery cell bracket 3. The lead-out portion 403 is connected perpendicularly to the connection portion 402 and is in abutting contact with the first connection terminal 2.

It should be noted that the lead-out portion 403 extends upward relative to the connection portion 402. The connection portion 402 is placed in the battery cell bracket mould of the injection moulding machine and forms an integral insert-moulded structure with the battery cell bracket 3.

It should be noted that the tabs 7 of the battery cell module are connected on the battery cell bracket 3 to form the main positive tab and the main negative tab. The current flowing to the main tab flows to the lead-out portion 403 through the connection portion 402 arranged on the battery cell bracket 3, then flows to the first portion 202 of the first connection terminal 2 that is in abutting contact with the lead-out portion 403, then splits to flow in parallel to the second portion 203 and the third portion 204 of the first connection terminal 2, and finally flows to the BMS control board 1, thereby allowing the BMS control board 1 to monitor, manage and control the battery cell module.

This allows the second connection terminal 4 to have a simple structural configuration, which not only facilitates fixed arrangement on the battery cell bracket 3 but also achieves abutting contact with the first connection terminal 2.

In some embodiments of the present application, a clearance opening 101 is provided in the BMS control board 1. The second connection terminal 4 extends out of the clearance opening 101.

The clearance opening 101 may be provided at any position on the BMS control board 1, such as at an edge of the BMS control board 1 or in a middle area of the BMS control board, which will not be described in detail here.

Further, the clearance opening 101 is provided at the edge of the BMS control board 1, and the clearance opening 101 has a U-shaped edge. The first portion 202 of the first connection terminal 2 is located at a bottom side of the U-shaped edge of the clearance opening 101.

Further, two clearance openings 101 are provided, which are respectively located at edges of two opposite sides of the BMS control board 1. The positive lead-out plate and the negative lead-out plate extend from the two clearance openings 101, respectively.

The clearance opening 101 is provided at the edge of the BMS control board 1 to facilitate formation and machining. The position of the clearance opening 101 determines the arrangement positions of the first connection terminal 2 and the second connection terminal 4, thereby rationally planning the component arrangement space on the BMS control board 1.

Referring to Figs. 3-6, in other embodiments of the present application, the battery cell bracket 3 has a first positioning member 301; and the BMS control board 1 has a second positioning member 102. The first positioning member 301 mates with the second positioning member 102 for positioning.

Further, a plurality of groups of first positioning members 301 and a plurality of groups of second positioning members 102 are provided correspondingly.

Preferably, two first positioning members 301 are provided, and the two first positioning members 301 are located at diagonal positions of the battery cell bracket 3, respectively. Two second positioning members 102 are provided, and the two second positioning members 102 are located at diagonal positions of the BMS control board 1, respectively.

Such an arrangement can ensure the precise positioning of the battery cell bracket 3 relative to the BMS control board 1, thereby ensuring that the lead-out portion 403 of the second connection terminal 4 can accurately extend out of the clearance opening 101 of the BMS control board 1, and is in abutting contact with the first portion 202 of the first connection terminal 2.

Further, the first positioning member 301 is a guide post, the second positioning member 102 is a guide hole, and the guide post passes through the guide hole.

The guide hole and the guide post enable precise and fast positioning of the battery cell bracket 3 on the BMS control board 1, and have simple structures, facilitating production and manufacturing and having low costs.

In addition, as described above, the lithium-ion batteries have the advantages such as light weight, long cycle life and high capacity, and therefore the lithium-ion batteries are also widely used in motorcycles. However, the excessive number of connection harnesses between the BMS control board and the electrode terminal posts in a lithium-ion battery pack leads to difficult management and certain potential safety hazards. When wiring faults such as failure and loosening of the connection lines of the BMS control board or crossing of the lines occur, internal short circuits of the battery pack will be caused, which eventually causes a rise in the internal temperature of the battery pack, thereby affecting the safety and reliability of the battery pack.

To this end, the present application provides another battery pack which effectively solves the problems of difficult management due to an excessive number of connection harnesses between the BMS control board and the electrode terminal posts, and internal short circuits of the battery pack caused by wiring faults such as line loosening or line crossing. The battery pack is described in detail below with reference to Figs. 10 to 22.

As shown in Figs. 10 to 22, the battery pack includes a BMS control board 1, an interconnection busbar 12 and an upper cover 13. The interconnection busbar 12 is fixed and electrically connected to the BMS control board 1. The upper cover 13 has an accommodating hole in which an electrode terminal post 14 is provided. The interconnection busbar 12 extends to and is connected to the electrode terminal post 14 to such that the interconnection busbar 12 is fixed and electrically connected to the electrode terminal post 14.

It should be noted that an accommodating space is formed in the upper cover 13. One end of the electrode terminal post 14 is in communication with the accommodating space and the other end can be in communication with an external space.

The interconnection busbar 12 includes a positive interconnection busbar and a negative interconnection busbar arranged spaced apart and opposite each other. The electrode terminal post 14 includes a positive electrode terminal post 143 and a negative electrode terminal post 144 arranged spaced apart and opposite each other. The positive interconnection busbar and the positive electrode terminal post 143 enable the leading-out of the main positive electrode of the battery cell module, and the negative interconnection busbar and the negative electrode terminal post 144 enable the leading-out of the main negative electrode of the battery cell module. Moreover, the electrical connection with an external circuit is achieved by means of the positive electrode terminal post 143 and the negative electrode terminal post 144.

Further, the positive interconnection busbar and the negative interconnection busbar are both copper busbars. Specifically, the positive interconnection busbar is a PACK+ copper busbar and the negative interconnection busbar is a PACK- copper busbar.

A positive electrode label and a negative electrode label are affixed to the upper cover 13. The positive electrode label is positioned opposite the positive electrode terminal post 143; and the negative electrode label is positioned opposite the negative electrode terminal post 144. This makes it easier for a user to distinguish, allowing for the correct connection of a positive connection terminal and a negative connection terminal of an external circuit.

The electrode terminal post 14 is arranged in the upper cover 13. The interconnection busbar 12 is arranged on the BMS control board 1. The electrical connection between the BMS control board 1 and the electrode terminal post 14 is achieved by means of the interconnection busbar 12 so as to lead out the main electrode. With the above configuration, the need for the connection lines between the BMS control board 1 and the electrode terminal post 14 is eliminated, such that internal short circuits of the battery pack caused by the faults such as failure and loosening of the connection lines of the BMS control board 1 or crossing of lines are avoided, thereby ensuring the safety and reliability of the lead-out of the main electrode.

In the battery pack according to the present application, an electrode terminal post 14 is fixed and electrically connected to the BMS control board 1, and the electrode terminal post 14 extends out of the upper cover 13 so as to lead out the main electrode of the battery cell module. With the above configuration, the need for the connection lines between the BMS control board 1, the electrode terminal post 14 and the upper cover 13 is eliminated, such that internal short circuits of the battery pack caused by the faults such as failure and loosening of the connection lines of the BMS control board 1 or crossing of lines are avoided, thereby ensuring the safety and reliability of the lead-out of the main electrode. Further, by means of the electrode terminal post 14, not only the leading-out of the main electrode is enabled, but also the connection and fixation between the BMS control board 1 and the upper cover 13 are achieved, resulting in a dual-purpose technical effect and simplifying the assembly of the battery pack.

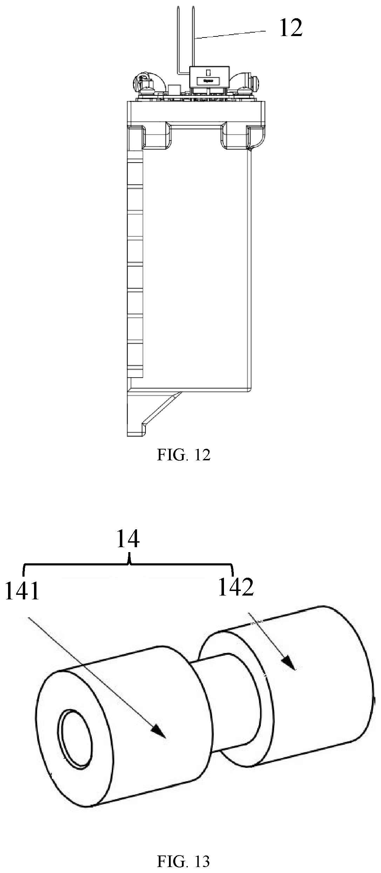

Referring to Figs. 13-17 and 21-22 of the description, in some embodiments of the present application, the electrode terminal post 14 includes an internal connection end 141 and an external connection end 142 positioned opposite to each other. The internal connection end 141 is electrically connected to the interconnection busbar 12. The external connection end 142 is electrically connected to an external circuit.

It should be noted that the internal connection end 141 is located inside the upper cover 13. The external connection end can extend out of the upper cover 13. Moreover, a solid intermediate connecting member is provided between the internal connection end 141 and the external connection end 142 to ensure the effect of sealing connection of the internal connection end 141 within the upper cover 13.

By providing the electrode terminal post having the internal connection end 141 and the external connection end 142, convenient and rapid electrical conduction between an internal circuit and an external circuit is achieved, and the effect of sealing connection with the upper cover 13 is more reliable, making management and control easy.

In some embodiments of the present application, referring to Figs. 10-11, a first hole 121 is provided at an end of the interconnection busbar 12 away from the BMS control board 1. Referring to Figs. 13-17 and 21-22 of the description, a second hole 1411 is formed in the internal connection end 141 along its axial direction. The first hole 121 can extend to a position opposite the second hole 1411. A fastener 15 passes through the first hole 121 and the second hole 1411 in sequence to achieve the fixation and electrical connection between the interconnection busbar 12 and the internal connection end 141.

This enables a detachable connection between the interconnection busbar 12 and the electrode terminal post 14, facilitating the assembly of the battery pack, and achieving more reliable and stable electrical connection and fixation.

It should be noted that the interconnection busbar 12 may also be welded to the internal connection end 141.

In some embodiments of the present application, the second hole 1411 is a threaded hole having an internal thread; and the fastener 15 has an external thread adapted to the internal thread. Further, the fastener 15 is a screw. Further, the screw is a cross recessed pan head combination machine screw.

It should be noted that the threaded connection enables the reliable fixation between the interconnection busbar 12 and the internal connection end 141, and allows for more convenient and rapid assembly and disassembly.

It should be noted that, in addition to achieving the connection and fixation between the interconnection busbar 12 and the internal connection end 141 by means of a threaded connection, other configurations are also possible. For example, the second hole is a cylindrical hole, and the fastener 15 is a pin capable of being in interference fit with the cylindrical hole.

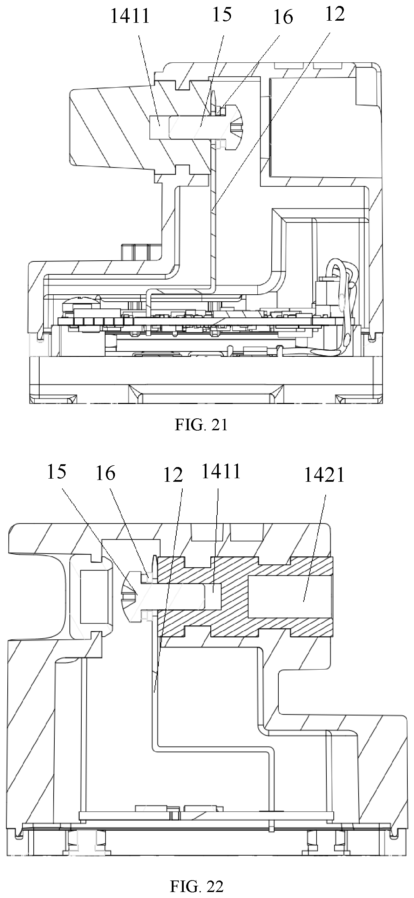

Referring to Figs. 21-22, further, a sealing gasket 16 is provided on a side of the first hole 121 away from the second hole 1411. The fastener 15 passes through the sealing gasket 16, the first hole 121 and the second hole 1411 in sequence to achieve the fixation and electrical connection between the interconnection busbar 12 and the electrode terminal post 14.

It should be noted that the sealing gasket 16 is a sealing foam.

By providing the sealing gasket 16, the tightness of the connection is increased, preventing external moisture from entering the interior of the battery pack. Furthermore, the effect of shock absorption at the connection is effectively improved, thereby improving the usage performance of the battery pack.

It should be noted that the first hole 121 is a cylindrical hole.

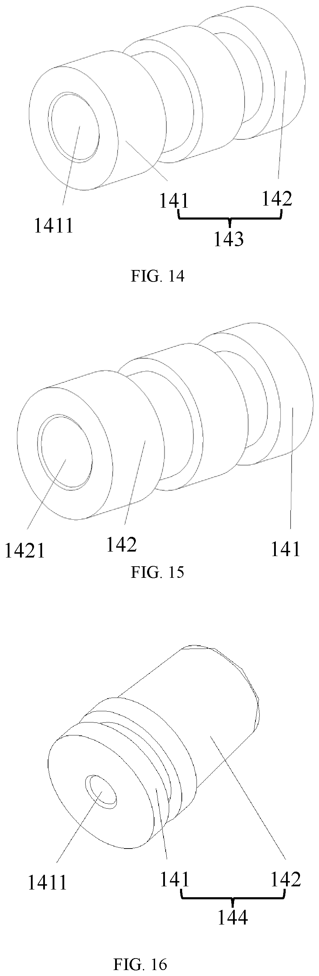

Referring to Figs. 14-15, 18 and 22 of the description, in some embodiments of the present application, the external connection end 142 of the positive electrode terminal post 143 that extends out of the upper cover 13 is a cylinder. Referring to Figs. 16-17, 18 and 21, the external connection end 142 of the negative electrode terminal post 144 that extends out of the upper cover 13 is a cone.

It should be noted that along a direction from the centre of the upper cover 13 to the outside of the upper cover 13, the cross-sectional dimension of the external connection end 142 gradually decreases.

By configuring the external connection end 142 of the positive electrode terminal post 143 and the external connection end 142 of the negative electrode terminal post 144 into different structural forms, it is convenient for the user to clearly distinguish between the positive electrode terminal post 143 and the negative electrode terminal post 144, ensuring the correct connection of the positive connection terminal and the negative connection terminal of the external circuit.

Referring to Figs. 15 and 22, in some embodiments of the present application, a third hole 1421 is formed in the external connection end 142 of the positive electrode terminal post 143 along its axial direction for insertion with a positive connection terminal of the external circuit that has an insertion post. The electrode terminal post 14 further includes a third hole 1421 along its axial direction. The third hole 1421 can be electrically connected to an external circuit.

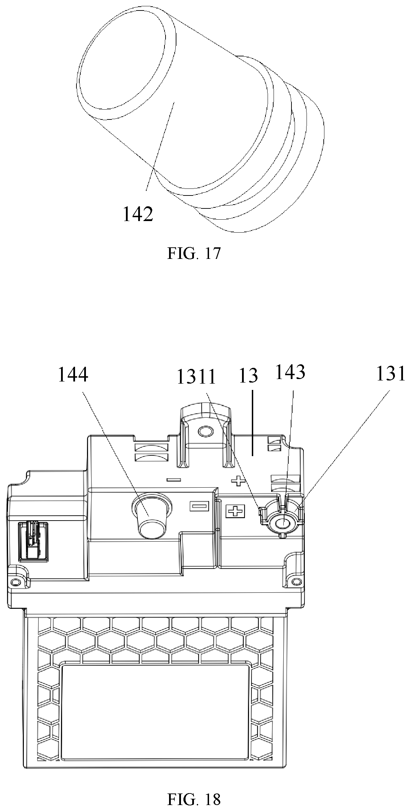

Referring to Figs. 17-18 and 21, further, the external connection end 142 of the negative electrode terminal post 144 is of a solid structure for insertion into a negative connection terminal of an external circuit that has an insertion hole.

With the above configuration, the structural forms of the positive connection terminal and the negative connection terminal of the external circuit can be ensured to have significant differences, thereby achieving a good fool-proof effect.

It should be noted that since the solid intermediate connecting member is provided between the internal connection end 141 and the external connection end 142 of the positive electrode terminal post 143, the second hole 1411 is not in communication with the third hole 1421. The second hole 1411 is in communication with the accommodating space formed by the upper cover 13, and the third hole 1421 is in communication with the external space. This allows the interconnection busbar 12 to be fixed and electrically connected to the second hole 1411 of the electrode terminal post 14 within the accommodating space, such that the electrically connected electrode terminal post 14, interconnection busbar 12, and BMS control board 1 are all ensured to be located within the sealed accommodating space formed by the upper cover 13. The accommodating space is not in communication with the external space, and thus the sealing performance is excellent, thereby effectively ensuring the safety performance of the battery pack.

In some embodiments of the present application, the electrode terminal post 14 is an embedded copper nut. The upper cover 13 is an injection-moulded part. A suitable embedded copper nut is selected and placed in an upper cover mould of an injection moulding machine according to a preset arrangement position, then plastic particles are melted by the injection moulding machine and delivered to the upper cover mould, and finally the plastic encapsulates the embedded copper nut together to form an integral structure of the upper cover 13 and the embedded copper nut.

Further, the positive electrode terminal post 143 is a positive embedded copper nut; and the second hole 1411 of the internal connection end 141 of the positive embedded copper nut has an M6 thread, and the third hole 1421 of the external connection end 142 of the positive embedded copper nut has an M5 thread.

Further, the negative electrode terminal post 144 is a negative embedded copper nut; and the second hole 1411 of the internal connection end 141 of the negative embedded copper nut has an M8 thread, and the external connection end 142 of the negative embedded copper nut is of a solid conical structure.

It should be noted that in addition to configuring the external connection end 142 of the negative embedded copper nut to be of a solid conical structure, a third hole 1421 may also be formed along the axial direction of the external connection end 142; and the third hole 1421 has an M5 thread.

Referring to Fig. 18, in some embodiments of the present application, a fool-proof structural member 131 is provided on an outer surface of the upper cover 13. The external connection end 142 of the positive electrode terminal post 143 is inserted into the fool-proof structural member 131.

It should be noted that the fool-proof structural member 131 is formed with fins 1311 arranged spaced apart in a circumferential direction. The positive connection terminal of the external circuit has a connecting sleeve capable of being sleeved over the fool-proof structural member 131. By means of the adaptive engagement between the connecting sleeve and the fins 1311, the positive connection terminal of the external circuit can be effectively prevented from rotating.

By providing the fool-proof structural member 131, it is more convenient for the user to distinguish between the positive electrode terminal post 143 and the negative electrode terminal post 144 of the battery pack, thereby achieving a clearer and more explicit fool-proof structure.

Referring to Figs. 10-12 and 21-22 of the description, in some embodiments of the present application, the interconnection busbar 12 has a bent portion. The bent portion is configured to conform to the internal shape of the upper cover 13 such that the interconnection busbar 12 extends to the electrode terminal post 14.

The bent portion conforming to the internal shape of the upper cover 13 means that the interconnection busbar 12 is arranged in a bent configuration within the accommodating space formed by the upper cover 13 and conforms to the spatial shape of the accommodating space.

Specifically, the electrode terminal post 14 is horizontally embedded in the upper cover 13. A central axis of the second hole 1411 is arranged horizontally. The interconnection busbar 12 includes a first portion, a second portion and a third portion that are integrally connected in a bent configuration. The first portion is arranged vertically, the second portion is arranged horizontally, and the third portion is arranged vertically.

It should be further noted that a bending angle and number of bends of the bent portion of the interconnection busbar 12 are adaptively adjusted according to the shape of the accommodating space formed by the upper cover 13, as long as the first hole 121 of the interconnection busbar 12 can be bent and extended to a position opposite the second hole 1411 of the electrode terminal post 14. The specific configuration of the bent portion will not be described in detail here.

Referring to Fig. 10, in some embodiments of the present application, a solder pin 122 is provided on a bottom plate of the interconnection busbar 12. The solder pin 122 is inserted into and soldered to the BMS control board 1.

Further, the solder pin 122 is soldered to a pad of the BMS control board 1 by means of wave soldering.

This allows the electrical connection of the interconnection busbar 12 to the BMS control board 1 to be more convenient and rapid, and easy to manage and control.

The components and devices involved in the present application are merely illustrative examples and are not intended to require or imply that they must be connected, arranged, or configured in the manner shown in the accompanying drawings. As will be appreciated by those skilled in the art, these components and devices can be connected, arranged, and configured in any manner. Words such as "include", "comprise", "have", etc., are open-ended words that mean "include but is not limited to" and can be used interchangeably therewith. The words "or" and "and" as used herein refer to the words "and/or" and can be used interchangeably therewith unless the context clearly indicates otherwise. The word "such as" as used here refers to the phrase "such as, but not limited to" and can be used interchangeably therewith.

It should also be noted that in the device of the present application, the components can be decomposed and/or recombined. These decompositions and/or recombinations are to be regarded as equivalent solutions of the present application.

The above description of the disclosed aspects is provided to enable any person skilled in the art to make or use the present application. Various modifications to these aspects are readily apparent to a person skilled in the art, and the general principles defined herein may be applied to other aspects without departing from the scope of the present application. Therefore, the present application is not intended to be limited to the aspects shown herein, but to be in the broadest scope consistent with the principles and novel features disclosed herein.

The above description has been given for purposes of illustration and description. In addition, this description is not intended to limit the embodiments of the present application to the form disclosed herein. While various example aspects and embodiments have been discussed above, those skilled in the art will recognize certain variations, modifications, alterations, additions and sub-combinations thereof.

The above descriptions are merely preferred embodiments of the present application but not intended to limit the present application, and any modifications, equivalent replacements, etc. made within the spirit and principle of the present application shall fall within the scope of protection of the present application.

## Claims

1. A battery pack, **characterized by** comprising:
a battery management system (BMS) control board (1) which is provided with a first connection terminal (2) electrically connected to the BMS control board (1); and
a battery cell bracket (3) which is located below the BMS control board (1) and on which a second connection terminal (4) is provided,
wherein the second connection terminal (4) extends to a position opposite and abuts against the first connection terminal (2) such that the second connection terminal (4) is electrically connected to the first connection terminal (2).

2. The battery pack according to claim 1, **characterized in that**
a first mounting hole (201) is formed in the first connection terminal (2);
a second mounting hole (401) positioned opposite the first mounting hole (201) is formed in the second connection terminal (4); and
a fastener (5) passes through the first mounting hole (201) and the second mounting hole (401) to electrically connect the first connection terminal (2) to the second connection terminal (4).

3. The battery pack according to claim 2, **characterized in that**
the first mounting hole (201) is a first through hole formed in the first connection terminal (2);
the second mounting hole (401) is a second through hole formed in the second connection terminal (4);
a connecting sleeve (6) is provided on a side of the first connection terminal (2) away from the second connection terminal (4), or on a side of the second connection terminal (4) away from the first connection terminal (2); the connecting sleeve (6) is provided with an internal thread;
the fastener (5) is provided with an external thread; and the fastener (5) passes through the second through hole, the first through hole and the connecting sleeve (6) to electrically connect the first connection terminal (2) to the second connection terminal (4).

4. The battery pack according to any one of claims 1 to 3, **characterized in that** a solder pin (205) is provided on a bottom of the first connection terminal (2); and the solder pin (205) is inserted into the BMS control board (1).

5. The battery pack according to claim 4, **characterized in that** the first connection terminal (2) comprises a first portion (202), a second portion (203) and a third portion (204);
the first portion (202) is in abutting contact with the second connection terminal (4);
the second portion (203) and the third portion (204) are arranged on opposite sides of the first portion (202), respectively; and the solder pin (205) is provided on a bottom of each of the second portion (203) and the third portion (204).

6. The battery pack according to any one of claims 1 to 5, **characterized in that** the second connection terminal (4) and the battery cell bracket (3) are formed as an integral insert-moulded structure.

7. The battery pack according to any one of claims 1 to 6, **characterized in that** the second connection terminal (4) comprises a connection portion (402) and a lead-out portion (403);
the connection portion (402) is located at the battery cell bracket (3); and
the lead-out portion (403) is connected perpendicularly to the connection portion (402) and is in abutting contact with the first connection terminal (2).

8. The battery pack according to any one of claims 1 to 7, **characterized in that** a clearance opening (101) is provided in the BMS control board (1); and the second connection terminal (4) extends out of the clearance opening (101).

9. The battery pack according to claim 8, **characterized in that** the clearance opening (101) is a U-shaped slot formed in an edge of the BMS control board (1).

10. The battery pack according to any one of claims 1 to 9, **characterized in that**
the battery cell bracket (3) has a first positioning member (301);
the BMS control board (1) has a second positioning member (102); and
the first positioning member (301) mates with the second positioning member (102) for positioning.

11. A battery pack, **characterized by** comprising:
a BMS control board (1);
an interconnection busbar (12) fixedly connected to the BMS control board (1); and
an upper cover (13) having an accommodating hole in which an electrode terminal post (14) is provided,
wherein the interconnection busbar (12) extends to and is connected to the electrode terminal post (14).

12. The battery pack according to claim 11, **characterized in that** the electrode terminal post (14) has an internal connection end (141) and an external connection end (142) positioned opposite to each other;
the internal connection end (141) is electrically connected to the interconnection busbar (12); and
the external connection end (142) is electrically connected to an external circuit.

13. The battery pack according to claim 12, **characterized in that**
a first hole (121) is provided at an end of the interconnection busbar (12) away from the BMS control board (1);
a second hole (1411) is formed in the internal connection end (141) along an axial direction of the internal connection end (141);
the first hole (121) extends to a position opposite the second hole (1411); and
a fastener (15) passes through the first hole (121) and the second hole (1411) in sequence to fixedly connect the interconnection busbar (12) to the internal connection end (141).

14. The battery pack according to claim 13, **characterized in that** a sealing gasket (16) is provided on a side of the first hole (121) away from the second hole (1411).

15. The battery pack according to any one of claims 12 to 14, **characterized in that** the electrode terminal post (14) comprises a positive electrode terminal post (143) and a negative electrode terminal post (144);
the external connection end (142) of the positive electrode terminal post (143) that extends out of the upper cover (13) is a cylinder; and
the external connection end (142) of the negative electrode terminal post (144) that extends out of the upper cover (13) is a cone.

16. The battery pack according to any one of claims 12 to 15, **characterized in that** the electrode terminal post (14) comprises a positive electrode terminal post (143) and a negative electrode terminal post (144); and a third hole (1421) is formed in the external connection end (142) of the positive electrode terminal post (143) along an axial direction of the external connection end (142) of the positive electrode terminal post (143) for insertion with a positive connection terminal of the external circuit that has an insertion post.

17. The battery pack according to any one of claims 12 to 16, **characterized in that** the electrode terminal post (14) comprises a positive electrode terminal post (143) and a negative electrode terminal post (144); and the external connection end (142) of the negative electrode terminal post (144) is of a solid structure for insertion into a negative connection terminal of the external circuit that has an insertion hole.

18. The battery pack according to any one of claims 12 to 17, **characterized in that** the electrode terminal post (14) comprises a positive electrode terminal post (143) and a negative electrode terminal post (144);
a fool-proof structural member (131) is provided on an outer surface of the upper cover (13); and
the external connection end (142) of the positive electrode terminal post (143) is inserted into the fool-proof structural member (131).

19. The battery pack according to any one of claims 11 to 18, **characterized in that** the interconnection busbar (12) has a bent portion; the bent portion is configured to conform to an internal shape of the upper cover (13) such that the interconnection busbar (12) extends to the electrode terminal post (14).

20. The battery pack according to any one of claims 11 to 19, **characterized in that** a solder pin (122) is provided on a bottom of the interconnection busbar (12); and the solder pin (122) is inserted into the BMS control board (1).
